**Europäisches Patentamt**

**European Patent Office**

**Office européen des brevets**

(19)

(11) Veröffentlichungsnummer: **0 131 888**
**B1**

(12) **EUROPÄISCHE PATENTSCHRIFT**

(45) Veröffentlichungstag der Patentschrift:
14.09.88

(51) Int. Cl.⁴: **G 05 D 23/19, B 60 H 1/00**

(21) Anmeldenummer: **84108057.5**

(22) Anmeldetag: **10.07.84**

(54) Temperaturabhängige Steuerung für eine Omnibus-Innenraumheizung.

(30) Priorität: **15.07.83 DE 3325629**

(43) Veröffentlichungstag der Anmeldung:
**23.01.85 Patentblatt 85/4**

(45) Bekanntmachung des Hinweises auf die Patenterteilung:
**14.09.88 Patentblatt 88/37**

(84) Benannte Vertragsstaaten:
**AT FR GB IT NL SE**

(56) Entgegenhaltungen:
DE - A - 2 711 816
US - A - 2 640 409
US - A - 2 673 512
US - A - 4 373 576

**PATENTS ABSTRACTS OF JAPAN, Band 6, Nr. 187
(M-158)[1065], 25. September 1982; & JP - A - 57 95211
(HITACHI) 14.06.1982**

(73) Patentinhaber: **M A N Technologie GmbH, Dachauer
Strasse 667, D-8000 München 50 (DE)**

(72) Erfinder: **Kurtze, Harald, Anton-Hackl-Strasse 27,
D-8060 Dachau (DE)**
Erfinder: **Becker, Hermann, Sanddornweg 37,
D-8047 Karlsfeld (DE)**

ACTORUM AG

## Beschreibung

Die Erfindung betrifft eine temperaturabhängige Steuerung einer Omnibus-Innenraumheizung gemäss dem Oberbegriff des Anspruchs 1.

Bisher hat man für eine solche Heizung einen Bi-Metallschalter verwendet, der auf eine bestimmte Temperatur eingestellt wurde. Bei Erreichen einer unteren Temperaturgrenze wurde durch die Biegung des Bi-Metallstreifens ggf. über ein Relais das Heizungsgebläse angeschaltet und bei Erreichen einer oberen Temperaturgrenze, die jenseits des eingestellten Temperaturwertes lag, wieder ausgeschaltet.

Wenn der thermostatgesteuerte Schalter an einer günstigen, für die Fahrgastraum-Temperatur repräsentativen Stelle angebracht war, dann liess sich zwar die Temperatur bei Betrieb innerhalb der genannten Grenzen halten, es traten aber dennoch eine Reihe von Unzulänglichkeiten auf:

Die Heizung muss grundsätzlich derart dimensioniert sein, dass sie imstande ist, den Omnibus-Innenraum in verhältnismässig kurzer Zeit auf eine als angenehm empfundene Temperatur selbst im tiefen Winter aufzuheizen. Diese Temperatur liegt zwischen 18 und ca. 25 °C. Wird nun diese Heizung verwendet, um mittels der Thermostatregelung eine bestimmte Innenraumtemperatur beizubehalten, dann wird jedesmal nach Erreichen der unteren Temperaturgrenze der bereits warme Innenraum rasch aufgeheizt, bei Erreichen der oberen Grenze schaltet die Heizung vollständig ab und die Temperatur sinkt – in Abhängigkeit von der Aussentemperatur – unter Umständen sehr rasch wieder auf den unteren Wert ab. Das Ergebnis sind rasche Temperaturschwankungen, die das Wohlbefinden der Fahrzeuginsassen beeinträchtigen.

Aus Druckschrift US-A-2 640 409 (Spalte 4, Zeile 74 – Spalte 7, Zeile 3; Figuren 1–3 und 5–7) ist eine temperaturabhängige Steuerung für eine Omnibus-Innenraumheizung gemäss Oberbegriff von Anspruch 1 bekannt, bei der je ein Heizregister ("heater core 31, 40") mit zugehörigen Ventilatoren ("fans 34, 35, 36; 41, 42") im vorderen und hinteren Fahrgastinnenraum gemeinsam von zwei zusammenwirkenden thermostatischen Schaltern ("switches 43, 44") derart gesteuert wird, dass bei Überschreiten eines bestimmten ersten Temperaturwertes die erste Gruppe von Ventilatoren 32 und 42 zuerst abgeschaltet werden und dann bei Überschreiten eines höheren zweiten Temperaturwertes auch die zweite Gruppe von Ventilatoren 34, 36 und 41 abgeschaltet werden.

Diese beiden thermostatischen Schalter 43, 44 bilden die elektrischen Stufenschaltungen, mit der die Förderleistung der Heizgebläse für jedes Heizregister entsprechend gemeinsam eingestellt wird.

Ausgehend von diesem Stand der Technik liegt der Erfindung die Aufgabe zugrunde, die eingangsgenannte Steuerung dahingehend zu verfeinern, dass sie zwar einerseits das rasche Aufheizen des Omnibus-Innenraumes ermöglicht, andererseits aber dann, wenn die erreichte Temperatur konstant gehalten werden soll, möglichst wenige Temperaturschwankungen verursacht.

Diese Aufgabe wird durch die Merkmale des Anspruchs 1 gelöst. Hierbei ist der die Heizung betätigende Schalter als mehrstufiger Schalter ausgebildet, der imstande ist, durch geeignete Koppelungen mit der Heizung bzw. ggf. Anpassung der Heizung deren Heizleistung schrittweise zu ändern.

Hierbei ist dieser Schalter bevorzugt mit dem Heizungsgebläse verbunden, so dass dessen Förderleistung entsprechend den unterschiedlichen Schalterstellungen verändert werden kann. Es ist aber auch möglich, den Schalter zusätzlich etwa mit einem regelbaren Durchlaufventil für die Heizung oder einem Regler für eine Standheizung zu verbinden.

Die mit dem Schalter verbundene Regelung kann unterschiedlich ausgebildet sein. Es ist z.B. möglich, dass die Regelung die Differenz zwischen der von einem Temperaturmessfühler gemessenen Temperatur und der von einem Sollwertgeber vorgegebenen Temperatur feststellt und die Abhängigkeit vom Temperaturunterschied eine grössere oder kleinere Heizstufe wählt. Somit wird sichergestellt, dass der kalte Omnibus mit der grösstmöglichen Heizstufe erwärmt wird, während im Bereich der eingestellten Temperatur eine kleinere Heizleistung gewählt wird, die dafür sorgt, dass nach Erreichen der obengenannten unteren Temperaturgrenze nur noch verhältnismässig wenig Wärme zugeführt wird.

Es ist ferner möglich, verhältnismässig viele unterschiedliche Schaltstufen vorzusehen, so dass die Heizung auch nach Erreichen der oberen Temperaturgrenze nicht völlig abgeschaltet wird, sondern mit einer so kleinen Stufe weiterbetrieben wird, dass der Abkühlungsvorgang möglichst verzögert wird. Es ist grundsätzlich sogar möglich, so viele Schaltstufen vorzusehen, dass über längere Zeit hinweg ein Gleichgewichtszustand hergestellt wird, d.h. dass die Heizung dann eine Wärmemenge an den Fahrzeug-Innenraum abgibt, die im wesentlichen jener Wärmemenge entspricht, die durch Lüftung, Wärmeübergang usw. abgeführt wird.

Es ist schliesslich auch möglich, bei Erreichen der unteren Temperaturgrenze von einer grossen auf eine kleine Heizstufe umzuschalten und diese dann für einen vorgewählten Zeitraum weiterzubetreiben, wonach die Heizung völlig abgeschaltet wird und erst dann wieder angeschaltet wird, wenn die Temperatur bis auf den unteren Grenzwert abgesunken ist.

Wenn vorangehend von oberer und unterer Temperaturgrenze die Rede war, dann betrifft dies tatsächlich nur eine einzige Messtemperatur, wobei die Mess-Hysterese den Temperaturbereich bestimmt.

Hierbei besteht der Vorteil, dass der Temperaturmessfühler bzw. die Regelung auf unterschiedliche Temperaturbereiche auch in unterschiedlichen Zonen anspricht, die jeweils einer Schaltstufe des Schalters zugeordnet sind. Diese Temperaturbereiche können beispielsweise stets eine feste Temperaturdifferenz zum Sollwert aufweisen.

Der Schalter weist drei Schaltstufen auf, von denen eine den Ausschaltzustand der Heizung darstellt, eine zweite den Betrieb der Heizung bei voller Heizleistung und die dritte den Betrieb der Heizung bei verminderter Heizleistung.

Der Temperaturmessfühler spricht auf zwei unterschiedliche Temperaturbereiche an, von denen der erste um eine bestimmte Temperaturdifferenz, etwa 2° oder 3°, unter dem Sollwert liegt und der zweiten Schaltstufe, also der vollen Heizleistung, zugeordnet ist, während der zweite Temperaturbereich dem Sollwert entspricht und der dritten Schaltstufe bzw. der verminderten Heizleistung zugeordnet ist.

Durch diese Anordnung wird in Abhängigkeit vom jemals eingestellten Sollwert der Fahrzeuginnenraum rasch mit voller Heizleistung aufgeheizt, bis die obere Temperaturgrenze des unteren Temperaturbereiches erreicht ist. Dann wird auf die verminderte Heizleistung umgeschaltet, welche derart dimensioniert ist, dass sie bei winterlicher Aussentemperatur den Fahrzeug-Innenraum nur sehr langsam aufheizt. Erst wenn die obere Grenze des zweiten Temperaturbereiches erreicht ist, schaltet der Schalter in die erste Schaltstufe, die Heizung wird somit völlig abgeschaltet, und die Temperatur sinkt ab bis zur unteren Grenze des unteren Temperaturbereiches, die allerdings oberhalb der unteren Grenze des unteren Temperaturbereiches liegen muss.

Erst wenn die Fahrzeug-Innentemperatur unter die untere Grenze des unteren Temperaturbereiches abgesunken ist, wie etwa nach längerem Öffnen einer Türe im Winter, schaltet die Heizung mit voller Heizleistung an und bringt rasch die Temperatur wieder in die Gegend des Sollwertes.

Die Steuerung weist mehrere unterschiedliche Temperaturmessfühler und zugeordnete Heizeinrichtungen sowie Regelkreise der beschriebenen Art auf, so dass in einzelnen Fahrzeugabschnitten jeweils örtlich die Temperatur geregelt wird. Bei einem normalen Reiseomnibus sind zwei Temperaturmessfühler ausreichend, so dass aus Gründen der Wirtschaftlichkeit dieser Regelung der Vorzug gegeben wird.

Es ist aber insbesondere bei mehrstöckigen Gelenkomnibussen möglich, eine Vielzahl von Temperaturmessfühlern vorzusehen.

Es ist dem Grunde nach möglich, als Temperaturmessfühler einen Bi-Metallstreifen oder eine Sonde zu verwenden, welche mechanisch oder hydraulisch auf einen zugeordneten Schalter einwirkt. Bevorzugt ist aber jeder Temperaturmessfühler mit jenem elektronischen Regler verbunden, der den zugehörigen Schalter ansteuert, wobei die Regler aller im Fahrzeug angeordneten Temperaturmessfühler in einer zentralen elektronischen Regelschaltung angeordnet sind. Es genügt somit ein einziger, zentral bzw. am Armaturenbrett angeordneter Sollwertgeber, um die Fahrzeug-Innentemperatur einzustellen.

Ferner ist eine solche zentrale Regelschaltung ausbaufähig: So ist gemäss einer weiteren Ausgestaltung der Erfindung ein Entlüftungsgebläse vorgesehen, das seinerseits ggf. stufenweise betreibbar ist und mit dem oder den Schaltern gekoppelt ist; es kann beispielsweise verhindert werden, dass das Entlüftungsgebläse dann anschaltet, wenn die Heizung oder alle Heizungen gerade ausgeschaltet sind, um ein zu rasches Absinken der Fahrzeug-Innentemperatur zu vermeiden. Es ist ferner möglich, dann, wenn das Entlüftungsgebläse von Hand auf eine hohe Schaltstufe geschaltet wurde, unter Überbrückung der Temperaturmessfühler auch die Heizeinrichtung oder Heizeinrichtungen mit voller Heizleistung zu betreiben, um einen raschen Luftaustausch im Innenraum des Omnibusses vorzunehmen, ohne dass deshalb die Temperatur absinken müsste.

Ferner ist gemäss einer weiteren Ausgestaltung der Erfindung von Vorteil, einem Temperaturmessfühler eine Temperaturanzeige zuzuordnen, die zur Systemüberwachung oder auch zum Anzeigen von Störungsquellen führen kann (beispielsweise Verstellen von Heizungsschächten durch Gepäckstücke oder dgl.).

Der Gegenstand der Erfindung wird anhand der beigefügten, schematischen Zeichnung beispielsweise noch näher erläutert.

In dieser zeigt:

Fig. 1 die schematische Darstellung eines Omnibusses mit der erfindungsgemässen Temperatursteuerung,

Fig. 2 die Ansprechcharakteristik eines Ausführungsbeispiels der erfindungsgemässen Steuerung,

Fig. 3 ein Ausführungsbeispiel der elektronischen Schaltung zum Betreiben der in Fig. 1 und 2 dargestellten Steuerung.

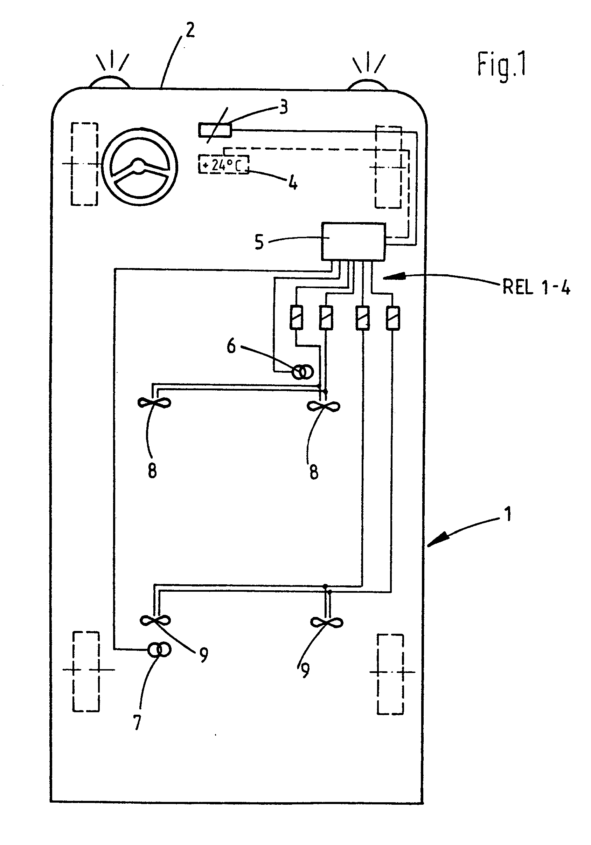

In Fig. 1 ist im schematischen Grundriss ein Omnibus 1 dargestellt, an dessen Armaturenbrett 2 ein Sollwertgeber 3 etwa in Form eines Potentiometers angeordnet ist, sowie eine Anzeige 4 zum Anzeigen des gewählten Sollwertes.

In einem Schaltkasten 5 ist eine elektronische Regelungsschaltung angeordnet, welche Informationen aus einem Temperaturmessfühler 6 für den vorderen Wagenbereich sowie einem Temperaturmessfühler 7 für den hinteren Wagenbereich erhält. Den Ausgängen des Schaltkastens 5 sind vier Relais Rel 1–4 nachgeschaltet, über welche zwei Heizgebläse 8 für den vorderen Wagenbereich sowie zwei Heizgebläse 9 für den hinteren Wagenbereich antreibbar sind.

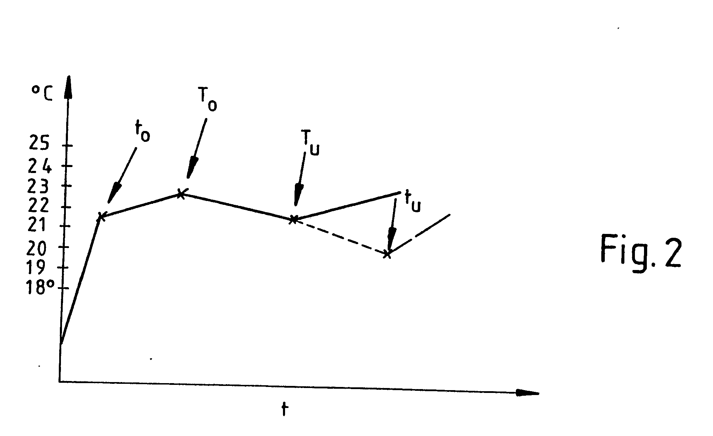

In Fig. 2 ist die Ansprechcharakteristik der in Fig. 1 gezeigten Heizsteuerung dargestellt. Hierbei zeigt die Ordinate die vorzuwählende Fahrzeug-Innenraumtemperatur, während an der Abszisse die Zeit aufgetragen ist.

Die Punkte $t_o$ und $t_u$ sind die obere bzw. untere Grenze eines unteren Temperaturbereiches; bei Erreichen dieser Grenze schaltet das Heizgebläse mit voller Heizleistung ab bzw. an.

Die Punkte $T_o$ und $T_u$ bezeichnen die obere bzw. untere Temperaturgrenze des oberen Temperaturbereiches. Beim Punkt $T_o$ schaltet das Heizgebläse in seiner kleinen Heizleistung ab, während es mit dieser Heizleistung beim Punkt $T_u$ wieder anschaltet.

Der Punkt $T_u$ kann derselben Temperatur wie der Punkt $t_0$ oder einer niedrigen Temperatur zugeordnet sein.

Die ausgezogene Linie zeigt den normalen Temperaturverlauf beim Winterbetrieb: Von der Garagentemperatur ausgehend steigt die Temperatur sehr rasch bis zum Punkt $t_0$ an, und pendelt von da aus zwischen den Grenzen $T_0$ und $T_u$.

Die gestrichelte Linie zeigt einen Temperaturverlauf, wie er etwa beim Öffnen einer Tür auftritt: Die Temperatur fällt unter den Punkt $T_u$ ab, und erreicht Punkt $t_u$, bei welchem das Heizgebläse mit hoher Heizleistung wieder anschaltet, um trotz offener Tür den Wagen-Innenraum wieder rasch aufzuheizen.

Der gewählte Sollwert beträgt im Beispiel 22 °C. Der Schaltpunkt $t_0$ liegt bei 21,5 °C, der Schaltpunkt $T_0$ bei 22,5 °C, der Schaltpunkt $T_u$ bei 21,5 °C und der Schaltpunkt $t_u$ bei 20 °C. Die Schalthysterese des oberen Temperaturbereiches beträgt 1°, während die Schalthysterese des unteren Temperaturbereiches 1,5° beträgt.

Fahrversuche bei Aussentemperaturen unter 0 °C haben gezeigt, dass die Schaltstufe mit grosser Heizleistung nur zum Aufheizen des Fahrgastraumes benötigt wird, während die Ausregelung bzw. Konstanthaltung der gewählten Temperatur von der Heizung dann voll übernommen wird, wenn sie auf kleine Heizstufe geschaltet ist.

Die Hysteresen sind nicht willkürlich gewählt, sondern unter Beachtung der Steuersicherheit der gesamten Regelung, um sicherzustellen, dass bei Störungen im Bordnetz keine unnötigen Schaltvorgänge ausgelöst werden.

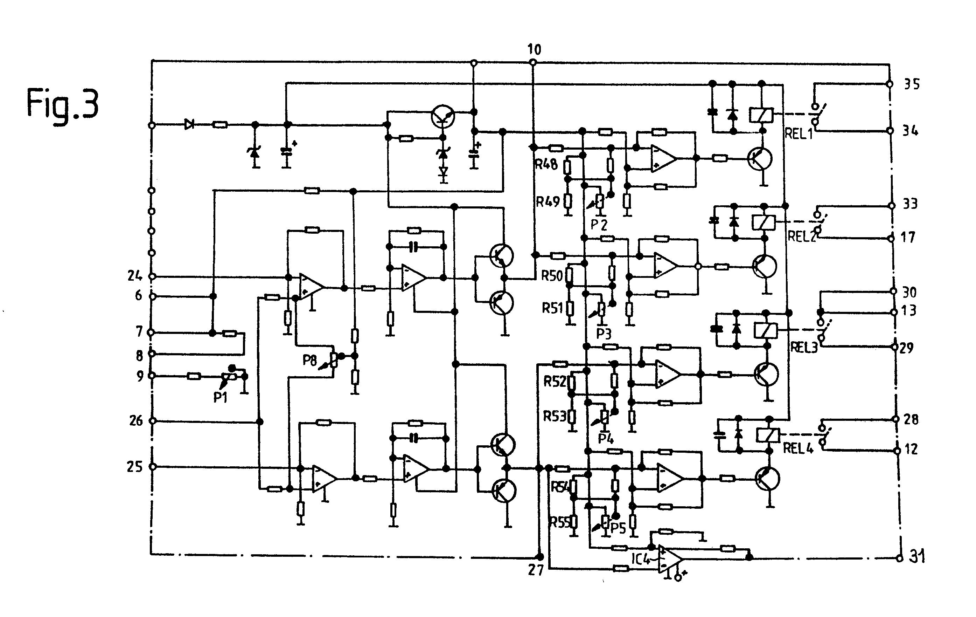

Die Empfindlichkeit der Temperaturmessfühler 6 und 7 bzw. die entsprechenden Eingangskreise der Regelschaltung der Fig. 3 wurden derart gewählt, dass kurzzeitige vorübergehende Luftwirbel, die Temperaturschwankungen an den Messfühlern auslösen können, keine Schaltvorgänge verursachen.

Die in Fig. 3 gezeigte Schaltung gliedert sich in zwei voneinander unabhängige Kanäle, welche über jeweils zwei Komparator-Endstufen die entsprechenden Lüfterendstufen schalten.

Die Ermittlung der Temperaturen erfolgt über die beiden Messfühler 6, 7 (Fig. 1), die als temperaturabhängige Konstantstromquellen arbeiten, d.h. sie liefern einen von der Temperatur abhängigen konstanten Strom. Diese Messfühler liegen für den einen Kanal an den Steckerpunkten 24 und 6 und für den anderen Kanal an den Steckerpunkten 25 und 7 an. Zur Vorwahl der gewünschten Fahrgastraumtemperatur dient der als Potentiometer ausgebildete Sollwertgeber 3 am Fahrzeug-Armaturenbrett 2. Dieser Potentiometer ist an den Anschlüssen 8, 9 und 26 (Potentiometer-Mitte) angeschlossen. Ein Potentiometer P1 liegt im Schaltkreis dieses Vorwahlpotentiometers und ermöglicht einen Abgleich des Temperaturbereiches. Mit dem Potentiometer P8 werden die beiden Kanäle auf Symmetrie abgeglichen, d.h., die Ausgangsspannungen beider Kanäle müssen bei gleichen Bedingungen gleich verlaufen. An den Steckerpunkten 10 und 27 liegen die Ausgangs- bzw. Schaltspannungen des jeweiligen Kanales. An diesen Steckerpunkten können Werte für eine Temperaturanzeige abgenommen werden.

Mit diesen Ausgangsspannungen werden pro Kanal zwei Komparatoren geschaltet, die, entsprechend der Referenzeinstellung, über eine Transistor/Relais-Stufe das Relais REL1 bis REL4 der jeweiligen Lüfterstufe schalten.

In der Schaltungszeichnung ist ferner ein Baustein IC4 angedeutet, der zur direkten Steuerung eines (nicht gezeigten) Entlüfterrelais dient (Anschluss 31).

Die Anschlüsse 12, 13, 17, 28, 29, 30, 33, 34, 35 sind Lüfteranschlüsse.

In der Schaltung sind Potentiometer P2 bis P5 gestrichelt dargestellt, die wahlweise anstelle der Widerstände R48 bis R55 einsetzbar sind.

## Patentansprüche

1. Temperaturabhängige Steuerung einer Omnibus-Innenraumheizung, mit mindestens und bevorzugt zwei jeweils unterschiedlichen Zonen des Fahrzeug-Innenraumes zugeordneten Heizeinrichtungen mit jeweils mindestens einem Heizgebläse (8, 9), das zur Anpassung seiner Förderleistung an einen vorgegebenen Innenraum-Temperatursollwert (3) mit einem zugeordneten Messfühler (6, 7) für die Innenraumtemperatur gekoppelt ist, wobei für die Heizgebläse (8, 9) zum Einstellen ihrer Förderleistungen eine elektrische Stufenschaltung (5) vorgesehen ist, dadurch gekennzeichnet, dass in mindestens zwei Zonen je ein Messfühler (6, 7) für die Innenraumtemperatur angeordnet ist, dass die elektrische Stufenschaltung (5) für jede dieser zwei Zonen eine elektronische Regeleinheit mit mindestens drei Schaltstufen (REL1, REL2; REL3, REL4) aufweist, die mit einem einstellbaren Sollwertgeber (3) zur stufenweisen Drehzahlregelung der jeder Zone zugeordneten Heizgebläse gekoppelt sind, wobei über die erste Schaltstufe die Heizung abgeschaltet ist, über die zweite Stufe die volle Heizleistung erbracht wird und über die dritte und eventuell weitere Schaltstufen eine reduzierte Heizleistung erbracht wird und wobei durch die Einschaltung der zweiten Schaltstufe ein oberer Temperaturpunkt $t_0$ erreicht wird, der automatischer Auslöser der dritten Schaltstufe ist, die einen über $t_0$ liegenden Temperaturbereich ($T_0$–$T_u$) geringer Temperaturdifferenz aufweist und bei infolge äusserer Einflüsse rasch absinkender Innenraumtemperatur und bei Unterschreitung eines unteren Temperaturpunktes $t_u$, wobei $t_u < t_0$ ist, die volle Heizleistung eingeschaltet wird.

2. Anordnung nach Anspruch 1, gekennzeichnet durch ein zuschaltbares Entlüftungsgebläse (31).

3. Steuerung nach einem der Ansprüche 1 bis 2, dadurch gekennzeichnet, dass mit dem Sollwertgeber (3) eine Temperaturanzeigeeinrichtung (4) gekoppelt ist.

## Claims

1. A temperature-dependent control for an omnibus interior heating, comprising at least and preferably two heating devices each associated with different zones of the vehicle interior and each having at least one heating fan (8, 9) coupled to an associated interior temperature sensor (6, 7) for adjustment of its output to a predetermined interior temperature set value (3), an electrical stage switching circuit (5) being provided for the heating fans (8, 9) for adjustment of their outputs, characterised in that an interior temperature sensor (6, 7) is disposed in each of at least two zones, the electrical stage switching circuit (5) for each of these two zones comprises an electronic control unit having at least three switching stages (REL1, REL2, REL3 REL4), coupled to an adjustable set-value transmitter (3) for staged control of the speed of the heating fans associated with each zone, the heating being switched off by the first switching stage, the full heating power being supplied via the second switching stage and a reduced heating power being supplied via the third and any other switching stages, the actuation of the second switching stage causing a top temperature point ($t_o$) to be reached which automatically triggers the third switching stage with has a temperature range ($T_o-T_u$) above $t_o$, such range having a small temperature difference, and the full heating power being switched in in the event of external influences causing the interior temperature to drop rapidly and in the event of undershoot of a bottom temperature point, $t_u$ being $< t_o$.

2. An arrangement according to claim 1, characterised by a ventilating fan (31) which is adapted to be switched in circuit.

3. A control according to either of claims 1 and 2, characterised in that a temperature display (4) is connected to the set-value transmitter (3).

## Revendications

1. Commande en fonction de la température du chauffage de l'habitacle d'un autocar, avec au moins et de préférence deux installations de chauffage respectivement affectées à des zones différentes de l'habitacle du véhicule et comportant chacune au moins une soufflerie de chauffage (8, 9), laquelle est couplée, pour adapter son débit à une valeur de consigne de température (3) préétablie pour l'habitacle, avec une sonde de température (6, 7) de l'habitacle qui lui est adjointe et sur laquelle il est prévu une connexion électrique à étages (5) pour les souffleries de chauffage (8, 9) en vue du réglage de leurs débits, caractérisé en ce que il est respectivement disposé dans deux zones au moins une sonde (6, 7) de mesure de la température, de telle sorte que la connexion électrique à étages (5) présente au moins pour chacune de ces deux zones une unité de réglage électronique comportant au moins trois plots de commutation (REL1, REL2, REL3, REL4) qui sont couplés avec un transmetteur de valeurs de consigne (3) réglable pour permettre le réglage graduel de la vitesse de la soufflerie effectuée à chaque zone, dont le premier plot arrête le chauffage, dont le deuxième plot libère toute la puissance de chauffage et dont le troisième plot et, éventuellement d'autres plots, procurent une puissance de chauffage réduite, et en ce qu'on atteint avec la commutation sur le deuxième plot un point supérieur de température $t_o$, qui déclenche automatiquement le troisième plot, qui présente une plage de température ($T_o-T_u$) située au-dessus de $t_o$, dont la différence de température est faible et qui branche toute la puissance calorifique lorsque la température de l'habitacle diminue rapidement par suite d'influences extérieures, et descend en-dessous d'un point inférieur de température pour lequel $t_u < t_o$.

2. Disposition selon la revendication 1, caractérisé par un ventilateur d'évacuation d'air (31) commutable.

3. Commande d'après une quelconque des revendications 1 ou 2, caractérisé en ce qu'un dispositif d'indication de la température (4) est couplé avec le transmetteur de valeurs de consigne (3).

0 131 888

Fig.1

REL 1-4

Fig. 2

Fig.3